# EUROPEAN PATENT APPLICATION

(11) **EP 0 965 913 A2**
(43) Date of publication of application: **22.12.1999**
(21) Application number: 99108394.0
(22) Date of filing: 29.04.1999
(51) Int. Cl.: G06F 9/44

(54) **Development tool for chip card applications**

(30) Priority: 19.06.1998 DE 19827415
(71) Applicant: International Business Machines Corporation, Armonk, NY 10504 (US)
(72) Inventor: Schaeck, Thomas, 77855 Achern (DE)
(74) Representative: Teufel, Fritz, Dipl.-Phys.

(57) **Abstract**

The invention presented describes a procedure for developing chip card applications. Chip card applications are distributed applications which consist of a card-specific part and an application part which is independent of the card. The card-specific part is created automatically using a card-specific generator. In this, the generator automatically creates the data objects from an abstract description and in the same step generates the card-specific representation of the data objects and the associated adapters for accessing these data objects. As each chip card type has its own generator, the card-specific part of the application no longer has to be programmed. Application programmers do not therefore need any knowledge of the card-specific programming of the application. A preferred design form of the invention presented is in the field of applications written in the Java programming language. In this case, the adapters are implemented using Java beans which can be integrated using visual development environments in Java applications. In this way, the development time of an application is reduced and simplified.

## Description

The invention presented describes a procedure and system for the creation of program parts for accessing chip cards.

Chip card applications are distributed applications. The total application consists of the application part on the card as well as the application parts in the terminal, host and possibly also in the background system. The application on the card, in the majority of chip cards used today, consists of data sets. These are filed in the card memory and protected by the operating system from unauthorised access through access control and sequential control.

An important requirement in developing a chip card application is that the application should, to a great extent, be independent of the manufacturer-specific characteristics of the chip card operating system.

Modern chip card applications therefore consist of a part which is independent of the card and the chip card manufacturer, and a part which is dependent on the card which supports the manufacturer-specific characteristics of the chip card operating system.

Current solution attempts in developing chip card applications plan to define unified interfaces for the card-dependent parts of the chip card application for access to different cards e.g. a unified interface for access to different file-oriented chip cards. These interfaces are oriented to the common characteristics of these chip cards and are therefore card oriented, i.e. access to these chip cards presupposes that these cards support a file system.

Chip cards which are based on completely different concepts such as file oriented cards, database oriented cards and object oriented cards, require an interface which is card-independent. This interface must make no assumptions about card characteristics but must offer methods which can be represented on each card.

The development of this type of interface is, however, very laborious and requires a developer with specific knowledge of the respective card-specific access methods.

It is therefore the task of the invention to provide a procedure and system which simplifies the development of chip card applications and simultaneously - as far as this is technically possible - means that they can be cold booted on all chip card types without changes to the program code and without knowledge of card-specific access methods.

This task is solved by the characteristics of claims 1 and 18. Further advantageous embodiments of the invention can be found in the subclaims.

The advantages of the invention can be seen in the application programmer for chip card applications saving time as code for access to the chip card is created automatically by the invention.

The invention guarantees consistency of the object to be represented on the chip card and the associated adapters as these are created in one step from the same description.

Application programmers do not require any knowledge of the APIs required for the chip card access as the code which is used is created automatically. The created code makes available corresponding get-and-set methods for the objects on the card.

The invention is particularly advantageous in a Java environment as the code is created in Java beans, which can be easily integrated into chip applications using graphic tools.

The invention will be described in more detail using the preferred design example, with figures as follows:
- FIG. 1: shows a simple chip card application consisting of a user interface, application logic and a part which refers to the card
- FIG. 2: shows a chip card application consisting of a user interface, application logic and a part which refers to the card consisting of an application-specific and a generic service
- FIG. 3: shows an implementation of the invention in a chip card application, where the part referring to the card consists of application-specific and card-specific services and an adapter for converting the interface expected by the application-specific part to a service interface
- FIG. 4: shows the generation of the parts in FIG. 3
- FIG. 5: shows an implementation of the invention in a JAVA environment

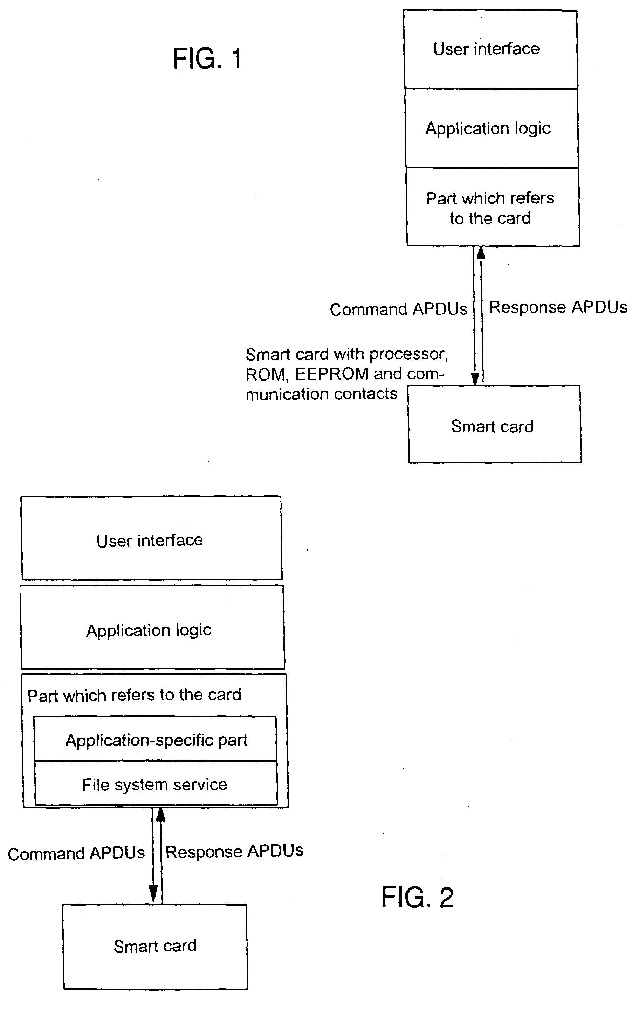

FIG. 1 describes a chip card application according to the current state of the art consisting of a user interface, application logic and a part which refers to the card. In the part which refers to the card, the Kommanda application protocol data units (APDU) for the card are created and sent.

The APDUs are used to communicate between the data processing system and the chip card. The chip card consists of at least one processor, one ROM and one readable and writable memory and contacts for communication with the data processing system. The card response APDUs are received and evaluated by the part which refers to the card. The part which refers to the card is stored in a data processing system, e.g. a PC or SetTop box.

FIG. 2 describes a chip card application according to the current state of the art as in FIG. 1 where the part which refers to the card is divided into a part which refers to the application (interface to the application logic) and a communication part (protocol to the card). The communication part is, for example, a file service which is oriented to a file structure which is supported by the card. However, this presupposes that the card has available a functionality suited to the service. The application-specific part is independent of the card used but is dependent on the type of service used.

In the procedure shown in FIG. 2, only file system oriented cards can be supported as the application-specific part is set directly on the file system service interface. Therefore it is not possible here, for example, to integrate onto a Java card which no longer offers a file system type of interface, without changes to the application-specific part.

The application-specific part of the application must currently be coded by hand. It must be newly coded each time if a service with other interfaces is to be used.

As the application part on the card and on the data processing system normally has to be separately coded, this can lead to problems in consistency, i.e. in the case of programming errors, this can lead to the two parts not matching.

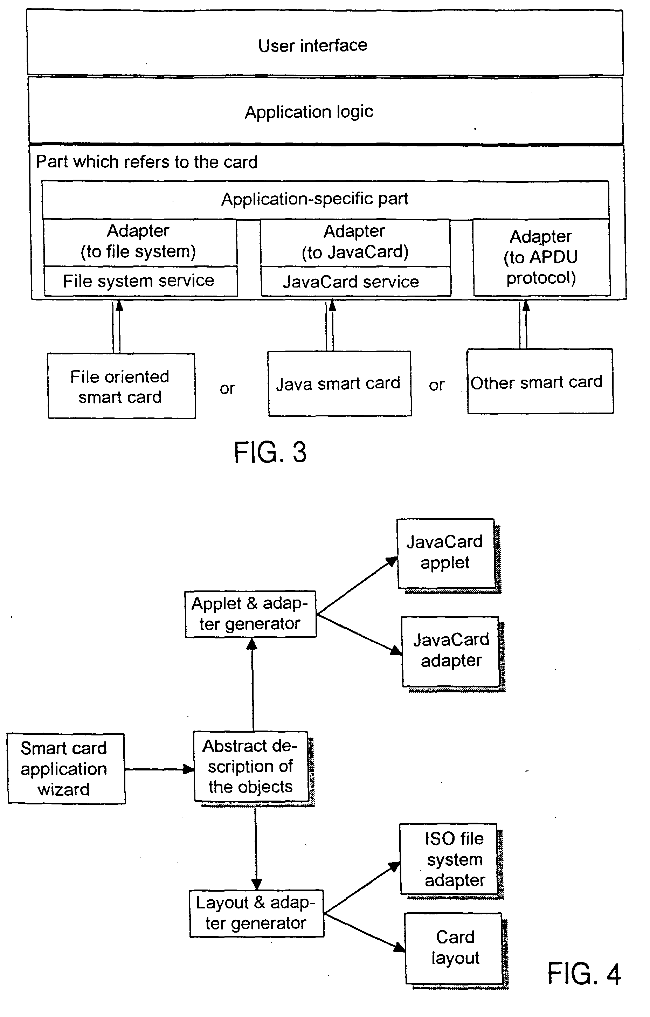

FIG. 3 describes the invention using a chip card application using adapters which represent the application-specific interface to the card-oriented interface of the service. The card-oriented interface is oriented to functions which the card represents. There are the following card-oriented interfaces:
- file system oriented interface (e.g. writing data in file, reading data from file)
- database oriented interface (e.g. writing/reading entries to/from databases)
- object oriented interfaces (e.g. setting/reading attributes)

In addition, there is an interface to the application logic, an application-oriented interface. The application-oriented interface is independent of the card and must be represented on the card-oriented interfaces of the cards.

This is done using adapters which are created automatically. The application-oriented part has, on the one hand, an interface to the application logic, and on the other hand, an interface to the card.

As a summary to FIG. 3, it can be established that a chip card application consists of a user interface, application logic and a card-specific part. The card-specific part consists of an application-specific part which is always the same, a card-specific service and an adapter for converting the interface expected by the application-specific part to the service interfaces. If no service is used, then the adapter can also represent the interface expected by the application-specific part directly on the application protocol level of the card.

FIG. 4 describes the automatic generation of the respective adapters for a file system oriented card and an object oriented card (e.g. JavaCard) and the associated objects which are stored on the respective chip card.

The adapters allow access to the objects, i.e. data is written there and/or read off.

The objects are described in a declarative language - e.g. using a name, a type, a size and access conditions. The descriptions of the objects are stored in the form of a file in the data processing system. From the description, representations of the objects on the chip card (on card) and the associated adapters (off card) are created through a generator for access to these objects. The adapters are part of the application on the data processing system.

Each card has its own generator which allows its own card-dependent representation of the object described. The card dependent generator has the information to convert an abstract description of the object into a card specific representation.

Basically each card also has its own adapter except for the case where access to objects of different representations can be made using a common service interface.

For cases where a JavaCard is used, the card-specific part (on-card part) consists of so-called applets which consists of attributes (e.g. data) and methods for accessing these attributes, and a part which is outside the card (off card part) for accessing methods of the applet which is available, for example, on a data processing system.

For cases where a file system oriented card is used, the on-card part consists of a representation of the part of the file structure which belongs to the application and an off-card part for accessing this part of the file structure.

In summary, it can be established that in FIG. 4 the starting point for the automatic creation of application parts referring to cards and the associated application objects on a chip card is an abstract (declarative) description of the required persistent objects.

The description defines attributes such as name, type, size and access conditions of the objects. From this description both the card-specific part of the application (adapter) as well as the associated data and code (objects) are created on the chip card.

For JavaCards, the required JavaCard applets and suitable JavaCard adapters are created using a generator for applets and adapters. For data system oriented cards, generators for layouts and adapter card-layout components and suitable file systems adapters are created.

The adapter code can be created for different programming languages. If, for example, Java code is created, then the adapters are represented using Java beans which are integrated using visual development environments in Java applications.

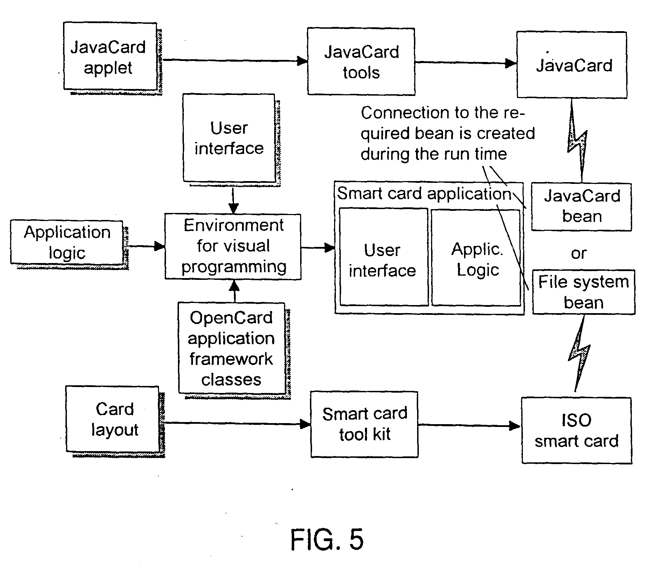

FIG. 5 describes a preferred design example of the invention in a Java environment. Here, the adapters are implemented as Java beans. Classes (Java classes) are defined as Java beans which are structured according to a certain regulation so that they can be analysed by visual tools. From these classes objects are created which can be visually represented and visually linked based on the information gained through the analysis.

FIG. 5 shows how adapters implemented as Java beans can be linked in a visual programming environment using application logic and a user interface to a smart card application.

Different Java beans (adapters) are created for different types of cards.

The selection of the Java beans required for a certain card is made during the run time based, for example, on the ATR (answer to reset) of the card.

In summary, it can be established that in FIG. 5 a chip card application can be visually created out of code for the user interface, application logic and OpenCard application framework classes. The beans required for accessing the chip card are established and linked during run time - dependent on the card.

JavaCard applets are applied to the JavaCard using JavaCard tools. If a JavaCard is present, then a JavaCard bean is used for access.

In particular, the invention presented has the advantage that both the description of the objects to be represented, the adapters as well as the generators can be linked over the Internet or Intranet. Adapters can be linked at the run time of the application over the Internet or Intranet. Generators and descriptions of the objects can be linked at the developmental time of an application program over the Internet or Intranet.

## Claims

1. Procedure for developing chip card applications, characterised by the following steps:
a) creation of a user interface
b) creation of an interface between the user interface and the application logic
c) creation of the application logic
d) creation of an interface between the application logic and the application-specific, card-independent part of the chip card application
e) creation of an application-specific, card-independent part of the chip card application
f) creation of a unified interface between the application-specific, card-independent part of the chip card application and the respective card-specific service function for accessing the objects of the application which are stored on the chip card
g) representation of the interface according to step f) on the respective card-specific service functions using card-specific adapters which are created automatically using a generator
h) representation of the objects on the chip card using a generator

2. Procedure according to claim 1, characterised by the adapters in step g) and the representation of the objects in step h) being created simultaneously using a generator.

3. Procedure according to claims 1 and 2, characterised by the generator creating in one step both the adapters as well as the representation of the objects on the chip card from the description of the objects.

4. Procedure according to claims 1 to 3, characterised by the steps a) to h) being able to be carried out in any chronological order or in parallel to one another.

5. Procedure according to claims 1 to 4, characterised by the description of the objects being carried out in a declarative language.

6. Procedure according to claim 5, characterised by the description of the objects being defined by the attributes name, type, size and conditions for accessing the objects.

7. Procedure according to claims 1 to 6, characterised by the description of the objects being stored in a file in the data processing system and users of the generators having access to this file.

8. Procedure according to claims 1 to 7, characterised by access to the description of the objects being made over the Intranet or Internet.

9. Procedure according to claims 1 to 8, characterised by the generators being stored on a data processing system and the application developers having access to these generators.

10. Procedure according to claims 1 to 9, characterised by the access to the generators being made over the Intranet or Internet.

11. Procedure according to claims 1 to 10, characterised by the adapters being linked in the application program during the run time dependent on the respective card type.

12. Procedure according to claims 1 to 11, characterised by the adapters being stored on a data processing system and being linked by the application over the Internet or Intranet.

13. Procedure according to claims 1 to 11, characterised by the chip card being a file oriented chip card and the objects being represented in the file structure.

14. Procedure according to claims 1 to 11, characterised by the chip card being a JavaCard and the objects being represented on so-called JavaCard applets which contain data and methods for accessing this data.

15. Procedure according to claims 1 to 13, characterised by the adapters being implemented as Java beans.

16. Procedure according to claims 1 to 14, characterised by the Java applets being applied to the chip card using JavaCard tools.

17. Procedure according to claims 1 to 15, characterised by the selection of the Java beans for the respective card being made during the run time of the application.

18. Generator for the automatic creation of objects to be represented on chip cards and the associated adapters for accessing these objects, characterised by the following steps:
a) reading in the file with the abstract description of the objects which are to be applied to the chip card
b) generation of a card-specific representation of the objects and the associated adapters for accessing these objects from the description in step a)
c) storing the objects and adapters according to step b) in a data processing system.

19. Generator according to claim 18, characterised by the representation of the objects and the associated adapters being created in one step from the same description.

20. Generator according to claims 18 to 19, characterised by the objects being represented as JavaCard applets for JavaCards.

21. Generator according to claim 18, characterised by the objects being represented in the respective card-specific file structures for file-oriented cards.

22. Generator according to claims 18 to 21, characterised by the adapters being created as Java beans.

23. Data carrier containing a program for executing the procedure according to claims 1 to 17 or 18 to 22.
